(19) Europäisches Patentamt
European Patent Office
Office européen des brevets

(11) EP 2 508 540 A1

(12) **EUROPEAN PATENT APPLICATION**

(43) Date of publication:
**10.10.2012 Bulletin 2012/41**

(51) Int Cl.:
***C08F 10/02*** *(2006.01)* ***C08F 4/6592*** *(2006.01)*

(21) Application number: **11160808.9**

(22) Date of filing: **01.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Lanxess Elastomers B.V.**
**6167 AC Geleen (NL)**

(72) Inventors:
- **van Doremaele, Gerardus Henricus Josephus**
**6132 HN SITTARD (NL)**
- **Zuideveld, Martin Alexander**
**6229 GD MAASTRICHT (NL)**

(74) Representative: **Herbold, Matthias**
**Lanxess Deutschland GmbH**
**LIP-IPR**
**51369 Leverkusen (DE)**

(54) **Borane activated titanium catalyst system comprising guanidine and diene ligands**

(57) The invention relates to a catalyst system for the polymerization of olefins comprising a metal complex of formula CyLMD and an activating cocatalyst, wherein
M
is titanium,
Cy
is a cyclopentadienyl-type ligand,
D
is a diene,
L
is a guanidinate-containing ligand of the formula

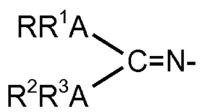

wherein each A is independently selected from nitrogen or phosphorous and R, $R^1$, $R^2$ and $R^3$ are independently selected from the group consisting of hydrogen, hydrocarbyl, silyl and germyl residues, substituted or not with one or more halogen, amido, phosphido, alkoxy, or aryloxy radicals, and the activating cocatalyst is a boron compound represented by the general formula $BR^4R^5R^6$, wherein B is a boron atom in the trivalent valence state and $R^4$, $R^5$ and $R^6$ are individually selected from the group consisting of halogen atom, hydrocarbyl, halogenated hydrocarbyl, substituted silyl, alkoxy or di-substituted amino residue.

The invention further relates to a process for the preparation of a polymer comprising at least one aliphatic or aromatic hydrocarbyl $C_{2-20}$ olefin wherein the at least one aliphatic or aromatic olefin is contacted with the catalyst system of the present invention.

EP 2 508 540 A1

Printed by Jouve, 75001 PARIS (FR)

## Description

The invention relates to a new catalyst system for the polymerization of olefins comprising a metal complex of formula CyLMD and an activating cocatalyst, wherein

M is titanium,

Cy is a cyclopentadienyl-type ligand,

L is a cyclopentadienyl-type ligand,

D is a diene.

The invention also relates to a process for the preparation of a polymer comprising at least one aliphatic or aromatic hydrocarbyl $C_{2-20}$ olefin.

Such metal complex and process are known from US 6,528,671 B1. US,6,528,671 B1 relates to a transition metal compound suitable as an addition polymerization catalyst and a process for the preparation of copolymer of ethylene and 1-hexene in the presence of a catalyst which is an organometallic complex of a group 4 metal, the organometallic complex containing a phosphinimine ligand.

A disadvantage of the process described in US 6,528,671 B1 is the relatively low activity of the organometallic complex containing the phosphinimine ligand.

The aim of the invention is to provide a new class of catalyst systems comprising imine-type ligands providing highly active catalyst systems for the polymerization of olefins.

This objective is reached by a catalyst system comprising a metal complex of formula CyLMD wherein L is a guanidinate ligand of the formula

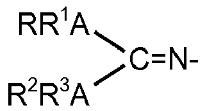

wherein each A is independently selected from nitrogen or phosphorous and R, $R^1$, $R^2$ and $R^3$ are independently selected from the group consisting of hydrogen, hydrocarbyl, silyl and germyl residues, substituted or not with one or more halogen, amido, phosphido, alkoxy, or aryloxy radicals and the activating cocatalyst is a boron compound represented by the general formula $BR^4R^5R^6$, wherein B is a boron atom in the trivalent valence state and $R^4$, $R^5$ and $R^6$ are individually selected from the group consisting of of halogen atom, hydrocarbyl, halogenated hydrocarbyl, substituted silyl, alkoxy or di-substituted amino residue.

Surprisingly with the catalyst system according to the invention, highly active catalyst systems for the polymerization of olefins are obtained. Another advantage of the catalyst system according to the present invention is its instantaneous catalyst activity upon combination with the activating cocatalyst.

<u>Details of the invention</u>

The invention relates to a catalyst system for the polymerization of olefins comprising a metal complex of formula CyLMD and an activating cocatalyst, wherein

M is titanium,

Cy is a cyclopentadienyl-type ligand,

D is a diene,

L is a guanidinate-containing ligand of the formula

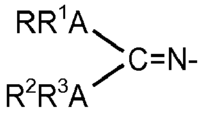

wherein each A is independently selected from nitrogen or phosphorous and R, $R^1$, $R^2$ and $R^3$ are independently selected from the group consisting of hydrogen, hydrocarbyl, silyl and germyl residues, substituted or not with one or more halogen, amido, phosphido, alkoxy, or aryloxy radicals and
the activating cocatalyst is a boron compound represented by the general formula $BR^4R^5R^6$, wherein B is a boron atom in the trivalent valence state and $R^4$, $R^5$ and $R^6$ are individually selected from the group consisting of halogen atom, hydrocarbyl, halogenated hydrocarbyl, substituted silyl, alkoxy or di-substituted amino residue.

In a preferred embodiment Cy is a mono- or polysubstituted cyclopentadienyl-type ligand, wherein the one or more substituents of Cy are individually selected from the group consisting of halogen, hydrocarbyl, silyl and germyl residues, optionally substituted with one or more halogen, amido, phosphido, alkoxy, or aryloxy residues.

As used herein, the term substituted cyclopentadienyl-type ligand is meant to broadly convey its conventional meaning, namely a substituted ligand having a five-membered carbon ring, which is bonded to the metal via a $\pi$-type bonding. Thus, the term cyclopentadienyl-type includes cyclopentadienyl, indenyl and fluorenyl. The term mono- or polysubstituded refers to the fact that one or more aromatic hydrogen atoms of the cyclopentadienyl structure have been replaced by one or more other residues. The number of substituents is between 1 and 5 for the cyclopentadienyl ligand, 1 to 7 for the indenyl ligand and 1 to 9 for the fluorenyl ligand. An exemplary list of substituents for a cyclopentadienyl ligand includes the group consisting of $C_{1-10}$ hydrocarbyl radical (which hydrocarbyl substituents are unsubstituted or further substituted), a halogen atom, $C_{1-8}$ alkoxy radical, $C_{6-10}$ aryl or aryloxy radical; an amido radical which is unsubstituted or substituted by up to two $C_{1-8}$ alkyl radicals, a phosphido radical which is unsubstituted or substituted by up to two $C_{1-8}$ alkyl radicals, silyl radicals of the formula $-Si-(R^7)_3$ wherein each $R^7$ is selected from the group consisting of hydrogen, $C_{1-8}$ alkyl or alkoxy radical, $C_{6-10}$ aryl or aryloxy radicals and germanyl radicals of the formula $-Ge-(R^8)_3$ wherein each $R^8$ is selected from the group consisting of hydrogen, $C_{1-8}$ alkyl or alkoxy radical, $C_{6-10}$ aryl or aryloxy radical.

Such cyclopentadienyl-type ligand according to the invention is a mono anionic ligand system that is connected to the titanium atom via an aromatic x-electron. In some cases, the monoanionic cyclopentadienyl coordination is described as an $\eta^5$-bond.

In a preferred embodiment the cyclopentadienyl ligand is penta substituted by methyl groups and in consequence Cy is 1,2,3,4,5-pentamethyl-cyclopentadienyl, $C_5Me_5$, commonly referred to as Cp*.

The characteristic of an imine ligand is defined as a group containing a carbon atom double bonded to a nitrogen atom. Non exhaustive examples of imine ligands are ketimine, amidine, phosphinimine, iminoimidazolidine, (hetero) aryloxyimines, pyrroleimines, indoleimines, imidazoleimines or (hetero)aryloxides, (substituted) pyridin-2-yl-methoxy, (substituted) quinolin-2-yl-methoxy, 8-hydroxyquinoline, 8-aminoquinoline, 8-phosphinoquinoline, 8-thioquinoline, 8-hydroxyquinaldine, 8-aminoquinaldine, 8-phosphinoquinaldine, 8-thioquinaldine and 7-azaindole or indazole and the like. A further example of an imine ligand is a guanidine ligand with the specific characteristic of guanidine ligands being that the carbon atom double bounded to the nitrogen atom is further connected to two substituents via Group 15 atoms represented by A in the formula above.

The substituents of the guanidinate ligand L, "$RR^1A$" and "$R^2R^3A$" may be the same or different without being part of a mutual ring structure.

A preferred embodiment of the invention consist of the catalyst component comprising a compound of formula CyLMD wherein L is $(RR^1N)(R^2R^3N)C=N-$ and R, $R^1$, $R^2$ and $R^3$ are independently selected from the group consisting of hydrogen and hydrocarbyl residue.

Conjugated diene ligands D may be associated with the metal in either an s-trans configuration ($\pi$-bound) or in an s-cis configuration (either $\pi$-bonded or $\sigma$-bonded). In the metal complexes used in the present invention, the diene ligand group, D, is preferably $\pi$-bound. Such a bonding type is readily determined by X-ray crystallography or by NMR spectral characterization according to the techniques of Yasuda, et al., Organometallics, 1, 388 (1982), Yasuda, et al., Acc. Chem. Res., 18, 120 (1985), and Erker, et al., Adv. Organomet. Chem., 24, 1 (1985), as well as the references cited therein. By the term "$\pi$-complex" is meant both the donation and back acceptance of electron density by the ligand, which is accomplished using ligand $\pi$-orbitals.

A suitable method of determining the existence of a $\pi$-complex in diene containing metal complexes is the measurement of metal-carbon atomic spacings for the carbons of the diene using common X-ray crystal analysis techniques. Measurements of atomic spacings between the metal M and C1, C2, C3, C4 (M-C1, M-C2, M-C3, M-C4, respectively) (where C1 and C4 are the terminal carbons of the 4 carbon conjugated diene group and C2 and C3 are the internal carbons of the 4 carbon conjugated diene group) may be made. If the difference between these bond distances, $\Delta d$, using the following formula:

$$\Delta d = [(M\text{-}C1 + M\text{-}C4) - (M\text{-}C2 + M\text{-}C3)] / 2$$

is greater than or equal to -0.15 Å, the diene is considered to form a π-complex with M. Such a π-bound diene is considered to be a electronically neutral ligand. In consequence the concerned titanium atom of the metal complex is in the formal oxidation state +2.

If Δd is less than -0.15 A, the diene is considered to form a σ-complex with M and the metal complex can formally be represented by a metallocyclopentene structure with the titanium atom in the +4 formal oxidation state.

It is to be understood that the complexes according to the present invention may be formed and utilized as a mixture of π-bonded diene complexes and σ-bonded diene complexes.

Inasmuch as the complexes contain at most one cyclopentadienyl type ligand (Cy) it follows that the diene ligand D cannot comprise a cyclopentadienyl group or other anionic, aromatic π-bonded group.

A preferred embodiment of the present invention consists of a catalyst system, wherein the conjugated diene, is a $C_{4-40}$ diene optionally substituted with one or more groups independently selected from the group consisting of hydrocarbyl, silyl, and halogenated carbyl.

Examples of suitable D moieties include: butadiene, isoprene, 1,3-pentadiene, 1,4-diphenyl-1,3-butadiene; 2,3-diphenyl-1,3-butadiene; 3-methyl-1,3-pentadiene; 1,4-dibenzyl-1,3-butadiene; 2,4-hexadiene; 2,4,5,7-tetramethyl-3,5-octadiene; 2,2,7,7-tetramethyl-3,5-octadiene; 1,4-ditolyl-1,3-butadiene; 1,4-bis(trimethylsilyl)-1,3-butadiene; 2,3-dimethylbutadiene.

A consequence of the preferred π-bonding of the coordinating diene is that the titanium atom of the complex of the present invention with the general formula CyLMD, has the formal valence 2+, since both the ligands Cy and L are monoanionic ligands.

A preferred embodiment of the present invention is a catalyst system wherein the activating cocatalyst is a borane represented by the general formula $BR^4R^5R^6$, wherein B is a boron atom in the trivalent valence state and $R^4$, $R^5$ and $R^6$ are individually selected from the group of halogen atom, hydrocarbyl, halogenated hydrocarbyl, substituted silyl, alkoxy or di substituted amino residue. A most preferred activating cocatalyst is tris pentafluorophenyl borane.

Readily commercially available borate and borane compounds capable of activating the described titanium complexes include: N,N-dimethylanilium-tetrakispentafluorophenyl borate, triphenylmethylium tetrakispentafluorophenyl borate, and trispentafluorophenyl boron.

Above described titanium metal complex and the activating cocatalyst represent the essential compounds required for the highly active polymerization reaction as described by the present invention. It will be understood by the person skilled in the art, that further additives are not excluded from the polymerization process. A non-limiting list of such additives consists of scavengers, stabilizers and carrier materials.

The term scavenger as used in this specification is meant to include those compounds effective for removing polar impurities from the reaction solvent. Such impurities can be inadvertently introduced with any of the polymerization reaction components, particularly with solvent, monomer and catalyst feed, and adversely affect catalyst activity and stability. It can result in decreasing or even elimination of catalytic activity, particularly when an activator capable of ionizing the titanium metal complex is also present. Aluminum alkyls and aluminoxanes are suitable scavengers. Typical examples are triethylaluminum ($Et_3Al$), trioctylaluminum ($Oct_3Al$), triisobutylaluminum ($i\text{-}Bu_3Al$), $(Et_2Al)_2O$, $(Oct_2Al)_2O$, $(i\text{-}Bu_2Al)_2O$ and oligomers thereof such as $[(Et_2Al)_2O]_n$ $[(Oct_2Al)_2O]_n$ and $[(i\text{-}Bu_2Al)_2O]_n$ (with $n > 1$). Optionally the trialkyl aluminium scavengers can be modified by phenolic compounds or other protic heteroatom containing compounds.

An exemplary list of carriers (also called carrier materials or support materials) includes metal oxides (such as silica, alumina, silica-alumina, titania and zirconia); metal chlorides (such as magnesium chloride); clays, polymers or talc.

The preferred support material is silica. In a particularly preferred embodiment, the silica has been treated with an aluminoxane (especially methylaluminoxane or MAO) prior to the deposition of the titanium metal complex. It will be recognized by those skilled in the art that silica may be characterized by such parameters as particle size, pore volume and residual silanol concentration. The pore size and silanol concentration may be altered by heat treatment or calcination. The residual silanol groups provide a potential reaction site between the aluminoxane and the silica. This reaction may help to "anchor" the aluminoxane to the silica.

As a general guideline, the use of commercially available silicas, such as those sold by W.R. Grace under the trademark Davidson 948 or Davidson 955, are suitable.

The invention further relates to a process for the preparation of a polymer comprising at least one aliphatic or aromatic hydrocarbyl $C_{2-20}$ olefin wherein the at least one aliphatic or aromatic olefin is contacted with the catalyst system of the present invention.

Polymerization process according to this invention may be undertaken in any of the well know olefin polymerization processes including those known as "gas phase", "slurry", "high pressure" and "solution".

The use of a supported catalyst is preferred for gas phase and slurry processes whereas a non-supported

catalyst is preferred for the solution process.

The polymerization process according to this invention uses an olefin, e.g. ethylene or propylene and may include other monomers which are copolymerizable therewith (such as other olefins, preferably propylene, butene, hexene or octene, and optionally dienes such as hexadiene isomers, vinyl aromatic monomers such as styrene or cyclic olefin monomers such as norbornene).

The polyethylene polymers which may be prepared in accordance with the present invention typically comprise not less than 60, preferably not less than 70 wt% of ethylene and the balance one or more $C_{4-10}$ alpha olefins preferably selected from the group consisting of 1-butene, 1-hexene and 1-octene. The polyethylene prepared in accordance with the present invention may be linear low density polyethylene having density from about 0.910 to 0.935 g/mL. The process of the present invention is preferably used to prepare polyethylene having a density below 0.910 g/mL - the so called very low and ultra low density polyethylenes.

A preferred embodiment of the present invention is a process wherein the prepared polymer is EPDM. EPDM is the common terminology to describe elastomeric co- and terpolymers of ethylene, propylene and optionally one or more diolefin monomer (diene). Generally, such elastomeric polymers will contain about 40 to about 80 wt% ethylene, preferably about 50 to 75 wt% ethylene and correspondingly from 60 to 20 wt% and preferably from 50 to 25 wt% of propylene respectively. A portion of the monomers, typically the propylene monomer, may be replaced by a nonconjugated diolefin. The diolefin may be present in amounts up to 10 wt% of the polymer although typically is present in amounts from about 3 to 5 wt%. The resulting polymer may have a composition comprising from 40 to 80 wt% of ethylene, from 60 to 20 wt% of propylene and up to 10 wt% of one or more diene monomers to provide 100 wt% of the polymer. Preferred but not limiting examples of the dienes are dicyclopentadiene (DCPD), 1,4-hexadiene (HD), 5-methylene-2-norbornene, 5-ethylidene-2-norbornene (ENB) and 5-vinyl-2-norbornene (VNB). Particularly preferred dienes are ENB and VNB.

The polymers prepared according to the process of the present invention may have a weight average molecular weight of 10,000 to 5,000,000 g/mol. Preferably, the polymers have a weight average molecular weight of 20,000 to 1,000,000 g/mol, more preferably 50,000 to 300,000 g/mol.

The preferred polymerization process of this invention encompasses the use of the novel catalysts system in a medium pressure solution process. As used herein, the term "medium pressure solution process" refers to a polymerization carried out in a solvent for the polymer at an operating temperature from 20 to 150°C (especially from 40 to 120°C) and a total pressure of from 3 to 35 bar. Hydrogen may be used in this process to control molecular weight. Optimal catalyst component concentrations are affected by such variables as temperature and monomer concentration but may be quickly optimized by non-inventive tests.

The most preferred process of the present invention is a solution process for the polymerization of ethylene propylene diene elastomers (EPDM). These processes are conducted in the presence of an inert hydrocarbon solvent such as a $C_{5-12}$ hydrocarbon which may be unsubstituted or substituted by a $C_{1-4}$ alkyl group such as pentane, methyl pentane, hexane, heptane, octane, cyclohexane, methylcyclohexane and hydrogenated naphtha.

The monomers used in the process according to the invention for the preparation of the polymer may be dissolved/dispersed in the solvent prior to being fed to a reactor. For a gaseous monomer, the monomer may be fed to a reactor so that it will dissolve in the reaction mixture. Prior to mixing, the solvent and monomers are preferably purified to remove potential catalyst poisons such as water or oxygen. The feedstock purification follows standard practices in the art, e.g. molecular sieves, alumina beds and oxygen removal catalysts are used for the purification of monomers. The solvent itself (e.g. methylpentane, cyclohexane, hexane or toluene) is preferably treated in a similar manner.

The feedstock may be heated or cooled prior to feeding to the polymerization reactor. Additional monomers and solvent may be added to a second reactor and the reactor(s) may be heated or cooled.

Generally, the catalyst component and ingredients such as scavenger and activator can be added as separate solutions to the reactor or premixed before adding to the reactor.

The residence time in the polymerization reactor will depend on the design and the capacity of the reactor. Generally the reactors should be operated under conditions to achieve a thorough mixing of the reactants. If two reactors in series are used, it is preferred that from 50 to 95 wt% of the final polymer is polymerized in the first reactor, with the balance being polymerized in the second reactor. It is also possible to use a dual parallel reactor setup. On leaving the reactor the solvent is removed and the resulting polymer is finished in a conventional manner.

It is also within the scope of this invention to use more than two polymerization reactors.

The invention also relates to the polymer obtainable by the process according to the invention.

A further advantage of the polymerization system according to the present invention is the speed of activation of the titanium diene complex upon the addition of the activating cocatalyst. Whereas most of the catalyst systems from the prior art require pre-mixing of the catalyst-cocatalyst system, the catalyst system of the present invention allows the immediate dosing of the titanium complex and the cocatalyst to the reactor without substantial loss of activity of the catalyst system.

## Claims

**1.** A catalyst system for the polymerization of olefins comprising

(a) a metal complex of formula CyLMD, wherein

M is titanium,
Cy is a cyclopentadienyl-type ligand,
L is an imine ligand,
D is a conjugated diene, and

(b) an activating cocatalyst,
which metal complex is **characterized in that**

L is a guanidinate ligand of the formula

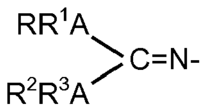

wherein each A is independently selected from nitrogen or phosphorous and R, $R^1$, $R^2$ and $R^3$ are independently selected from the group consisting of hydrogen, hydrocarbyl, silyl and germyl residues, substituted or not with one or more halogen, amido, phosphido, alkoxy, or aryloxy radicals, and
the activating cocatalyst is a boron compound represented by the general formula $BR^4R^5R^6$, wherein B is a boron atom in the trivalent valence state and $R^4$, $R^5$ and $R^6$ are individually selected from the group consisting of halogen atom, hydrocarbyl, halogenated hydrocarbyl, substituted silyl, alkoxy or di-substituted amino residue.

**2.** Catalyst system according to claim 1, wherein Cy is a mono- or polysubstituted cyclopentadienyl-type ligand, wherein the one or more substituents of Cy are individually selected from the group consisting of halogen, hydrocarbyl, silyl and germyl residues, optionally substituted with one or more halogen, amido, phosphido, alkoxy, or aryloxy residues.

**3.** Catalyst system according to any of the claims 1 and 2, wherein the diene is a $C_{4-40}$ diene optionally substituted with one or more groups independently selected from the group consisting of hydrocarbyl, silyl, and halogenated carbyl.

**4.** A process for the preparation of a polymer comprising at least one aliphatic or aromatic hydrocarbyl $C_{2-20}$ olefin **characterized in that** the at least one aliphatic or aromatic olefin is contacted with the catalyst system according to any of the claims 1 to 3.

**5.** Process according to claim 4, wherein the polymer is EPDM.

Europäisches Patentamt
European Patent Office
Office européen des brevets

# EUROPEAN SEARCH REPORT

Application Number
EP 11 16 0808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HENDERSON K W ET AL: "Synthesis of zirconocene amides and ketimides and an investigation into their ethylene polymerization activity", JOURNAL OF ORGANOMETALLIC CHEMISTRY, ELSEVIER-SEQUOIA S.A. LAUSANNE, CH, vol. 656, no. 1-2, 15 August 2002 (2002-08-15), pages 63-70, XP004372623, ISSN: 0022-328X, DOI: 10.1016/S0022-328X(02)01559-0<br>* table 3, last line *<br>* page 65, compounds 9 and 10 *<br>----- | 1-5 | INV.<br>C08F10/02<br>C08F4/6592 |
| Y | US 6 420 300 B1 (MCMEEKING JOHN [CA] ET AL) 16 July 2002 (2002-07-16)<br>* paragraph [0121] *<br>* example 21 *<br>* column 5, line 1 - line 5 *<br>* claims 1-5,10,11 *<br>----- | 1-5 | |
| L | EP 2 319 874 A1 (DSM IP ASSETS BV [NL]) 11 May 2011 (2011-05-11)<br>* paragraph [0037] *<br>* paragraph [0047] - paragraph [0049] *<br>* paragraph [0051] *<br>* example 4; table 3 *<br>* claims 1-11 *<br>----- | 1-5 | TECHNICAL FIELDS SEARCHED (IPC)<br>C08F |
| L | EP 2 336 204 A1 (DSM IP ASSETS BV [NL]) 22 June 2011 (2011-06-22)<br>* examples 1-7; table 1 *<br>* claims 1-8 *<br>----- | 1-5 | |

1

The present search report has been drawn up for all claims

| Place of search | Date of completion of the search | Examiner |
|---|---|---|
| Munich | 9 September 2011 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 11 16 0808

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2011

| Patent document cited in search report | | Publication date | Patent family member(s) | Publication date |
|---|---|---|---|---|
| US 6420300 | B1 | 16-07-2002 | NONE | |
| EP 2319874 | A1 | 11-05-2011 | WO 2011054927 A1 | 12-05-2011 |
| EP 2336204 | A1 | 22-06-2011 | WO 2011076772 A1 | 30-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6528671 B1


### Non-patent literature cited in the description


- **YASUDA et al.** *Organometallics,* 1982, vol. 1, 388
- **YASUDA et al.** *Acc. Chem. Res.,* 1985, vol. 18, 120
- **ERKER et al.** *Adv. Organomet. Chem.,* 1985, vol. 24, 1